# EUROPÄISCHE PATENTANMELDUNG

(11) **EP 0 816 709 A2**
(43) Veröffentlichungstag der Anmeldung: **07.01.1998**
(21) Anmeldenummer: 97110910.3
(22) Anmeldetag: 02.07.1997
(51) Int. Cl.: F16F 1/02, F16F 1/34

(54) **Federelement mit gestricktem Formkörper**

(30) Priorität: 03.07.1996 DE 19626754
(71) Anmelder: Buck, Alfred Ernst, 71149 Bondorf (DE)
(72) Erfinder: Buck, Alfred Ernst, 71149 Bondorf (DE)
(74) Vertreter: Patentanwälte Rüger, Barthelt & Abel

(57) **Zusammenfassung**

Ein vorzugsweise als Tellerfeder (2) ausgebildetes, bedarfsweise jedoch auch in anderen Formen und Anwendungen nutzbares Federelement (1) weist als wesentliches elastisches Element einen Federkörper auf, der aus einem komprimierten Gestrick, vorzugsweise einem Drahtgestrick, gebildet ist. Der Formkörper wird durch Verpressen eines Rohlings erhalten, der wenigstens eine, bedarfsweise auch mehrere Lagen eines Gestricks oder einer anderweitigen Maschenware enthält. Der so erhaltene Formkörper ist infolge mechanischer Verhakung der einzelnen Maschen miteinander und untereinander stabil. Er ist sowohl auf elastische Biegung als auch auf elastische Kompression belastbar und weist in beiden Fällen eine hohe innere Dämpfung auf.

## Beschreibung

Die Erfindung betrifft ein Federelement sowie dessen Herstellung.

Federelemente sind aus der Technik für vielfältige Einsatzzwecke bekannt. Beispielsweise werden Tellerfedern durch eine Scheibe aus federndem Material gebildet, die konisch gekrümmt ist.

Der Hub einer solchen Tellerfeder ist relativ beschränkt. Darüber hinaus weist eine solche Tellerfeder nur eine geringe Eigendämpfung auf, so daß gegebenenfalls zusätzliche Dämpferelemente notwendig werden.

Dies gilt auch für sonstige Metallfedern, wie Schraubenfedern, Biegefedern u.dgl. zusätzliche Dämpferelemente verkomplizieren häufig die Konstruktion und den Aufbau technischer Einrichtungen und verteuern diese somit.

Davon ausgehend ist es Aufgabe der Erfindung, hier abzuhelfen und ein Federelement zu schaffen, das einen vereinfachten Aufbau technischer Einrichtungen ermöglicht, bei denen Teile federnd zu lagern sind.

Darüber hinaus ist es Aufgabe der Erfindung, ein Verfahren zur Herstellung eines solchen Federelementes zu schaffen.

Diese Aufgaben werden durch das Federelement mit den Merkmalen des Patentanspruchs 1 sowie das Verfahren zur Herstellung eines Federelementes mit den Merkmalen des Patentanspruchs 17 gelöst.

Erfindungsgemäß weist das Federelement einen Federkörper auf, der aus einem vermaschten Ausgangsmaterial ausgebildet ist. Das Ausgangsmaterial ist vorzugsweise ein Draht, der in einem maschenbildenden Prozeß in eine räumliche Form überführt worden ist. In einem Preßvorgang erhält der so ausgebildete vermaschte Drahtkörper seine gewünschte Form. Der so ausgebildete Formkörper ist zunächst formstabil, darüber hinaus jedoch sowohl bieg- als auch zusammendrückbar. Das Zusammendrücken geht auf Kosten innerer, in dem komprimierten Gestrick vorhandener Räume, so daß das Gesamtvolumen des Formkörpers beim Komprimieren geringer wird. Dies ermöglicht Anwendungen, bei denen anderweitige Federelemente mit innerer Dämpfung, wie Gummikörper od.dgl., die ihr Volumen beim Zusammendrücken nicht vermindern, nicht anwendbar sind.

Der beispielsweise aus einem Drahtgestrick aufgebaute Federkörper weist sowohl bei Biegebeanspruchung als auch bei Druckbeanspruchung nicht nur eine hohe Elastizität, sondern darüber hinaus eine beträchtliche innere Dämpfung auf. Dies wird erreicht, indem mit aus einem einer Maschenware gebildeten Formkörper, im Gegensatz zu herkömmlichen Federelementen, eine direkte Kraftübertragung zwischen einer Krafteinleitungsstelle und einer Kraftausleitungsstelle des Federelementes vermieden wird. Der Kraftfluß verläuft vielmehr über eine Vielzahl von Kontakt- und Berührungsstellen zwischen einzelnen Abschnitten des drahtförmigen Ausgangsmaterials, was eine nennenswerte Dämpfung verursacht.

Durch die im Federkörper immanente Dämpfung können die erfindungsgemäßen Federelemente in Fällen angewendet werden, bei denen eine mit einer Dämpfungswirkung verbundene Federwirkung erforderlich oder gewünscht ist. Besonders vorteilhaft sind Anwendungsfälle, bei denen es aus Platz- oder Symmetriegründen schwierig oder unmöglich ist, getrennte Feder- und Dämpferelemente vorzusehen. Mit den erfindungsgemäßen Formkörpern aus vermaschtem drahtförmigem Material lassen sich äußerst platzsparende Feder- und Dämpferelemente ausbilden.

Aufgrund ihrer genannten doppelten Federeigenschaft, d.h. ihrer Biegeelastizität und ihrer Komprimierbarkeit, lassen sich mit den genannten Federkörpern Federelemente mit wenigstens zwei Kennlinienbereichen unterschiedlicher Federhärte ausbilden. Beispielsweise ist die Gestaltung progressiver Federkennlinienverläufe mit wechselnden und/oder konstanten Dämpfungswerten möglich.

Ein vielseitiges und die prinzipiellen Vorzüge der Erfindung nutzendes Federelement wird erhalten, wenn der Formkörper scheiben- oder plattenförmig ausgebildet ist und eine zentrale Öffnung aufweist. In diesem Zustand dient das Federelement beispielsweise als Scheibenfeder. Wird zusätzlich wenigstens eine konische Außenkontur vorgesehen, wird ein als Tellerfeder verwendbares Federelement erhalten. Ein Anwendungsfall für dieses ist beispielsweise im Maschinenbau bei der Lagerung einer hochdrehenden Spindel gegeben. Hier kann die aus Maschenware bestehende Tellerfeder zur axialen Federung und Dämpfung der Spindel verwendet werden.

Zylindrische Mantel- oder Außenflächen des Formkörpers dienen nicht nur der Lagerung und Führung desselben in einem Rohr oder in einer buchsenartigen Aufnahme, sondern darüber hinaus als Anlageflächen zum Abstützen von Seitenreaktionskräften, die beim Verformen und Komprimieren der betreffenden Tellerfeder entstehen. Im Gegensatz zu herkömmlichen Tellerfedern, bei denen, um ein Verklemmen zu vermeiden, zwischen der Tellerfeder und einer umgebenden Zylinderwandung Spiel erforderlich ist, kann die erfindungsgemäße Tellerfeder nahezu spielfrei oder im Einzelfalle sogar mit Vorspannung in eine entsprechende Aufnahme eingesetzt werden. Damit läßt sich der Dämpfungseffekt gezielt beeinflussen und gegebenenfalls erhöhen.

Eine Tellerfeder mit einem Federkörper aus vorgeformtem Drahtgestrick ist in ihrem Hub zulässigerweise weit deformierbar. Bei der Verformung wird die Tellerfeder aus ihrer konischen Form zunächst zu einer flachen Scheibe deformiert, deren Dicke bei weiterer Kraftsteigerung bis zu einem Minimalwert abnimmt. Der dadurch erzielbare Hub ist größer als mit einer vergleichbaren herkömmlichen Tellerfeder erreichbar. Darüber hinaus ist die Tellerfeder weitgehend überlastfest, was entsprechende Anwendungskonstruktionen vereinfacht. In vielen Fällen kann auf gesonderte Mittel zur Hubbegrenzung verzichtet werden, ohne daß die Tellerfedern Schaden nehmen.

Obwohl prinzipiell Maschenware Verwendung finden kann, die im Häkelverfahren, im Wirkverfahren oder mit anderweitigen Verfahren hergestellt worden ist, hat es sich als vorteilhaft herausgestellt, als Maschenware ein Gestrick zu verwenden. Zur Herstellung desselben wird ein Draht, vorzugsweise ein Federstahldraht, zu einem weitmaschigen Gestrick rechts/links verstrickt, wobei das Verhältnis von Maschenweite zu Drahtdurchmesser im Bereich von 13 bis 35 liegt. Als Draht ist vor allem harter Federstahldraht vorteilhaft.

Ein in seinen Gebrauchseigenschaften vorteilhaftes Federelement wird erhalten, wenn zunächst ein rechts/links gestrickter Schlauch aus Maschenware ausgebildet wird, der zu einem gewellten Band zusammengedrückt wird. Die Wellen des Bandes verlaufen vorzugsweise unter einem spitzen Winkel sowohl zu seiner Längsrichtung als auch zu seiner Querrichtung. Der Winkel der Wellen zur Längs- bzw. Querrichtung bestimmt die Eigenschaften des später zu erhaltenden Formkörpers und kann empirisch festgelegt werden.

Zur Ausbildung des gewünschten Formkörpers wird das gewellte Band zu einem Wickel aufgewickelt, der eine etwa hohlzylindrische Grundgestalt aufweist. Durch axiales Verdichten oder Zusammenpressen des durch den Wickel gebildeten Rohlings wird der gewünschte Federkörper erhalten, wobei das Volumen des entspannten Formkörpers ein Drittel bis ein Fünftel des Rohlings beträgt. Beim Preßvorgang wird das Volumen auf etwa ein Siebtel bis etwa ein Achtel des Ausgangsvolumens komprimiert.

Weitere Merkmale vorteilhafter Ausführungsformen oder Verfahrensschritte sind Gegenstand von Unteransprüchen.

In der Zeichnung sind Ausführungsformen der Erfindung dargestellt. Es zeigen:
Fig. 1 eine aus einzelnen Tellerfedern zusammengesetzte Druckfeder in schematisierter, längsgeschnittener Darstellung,
Fig. 2 eine Tellerfeder, die durch einen aus einem Drahtgestrick bestehenden Formkörper gebildet ist, in schematisierter, längsgeschnittener Darstellung,
Fig. 3 einen rundgestrickten Schlauch aus Drahtgestrick, wie er als Halbfabrikat zur Herstellung gestrickter Federelemente dient, in schematisierter perspektivischer Ansicht,

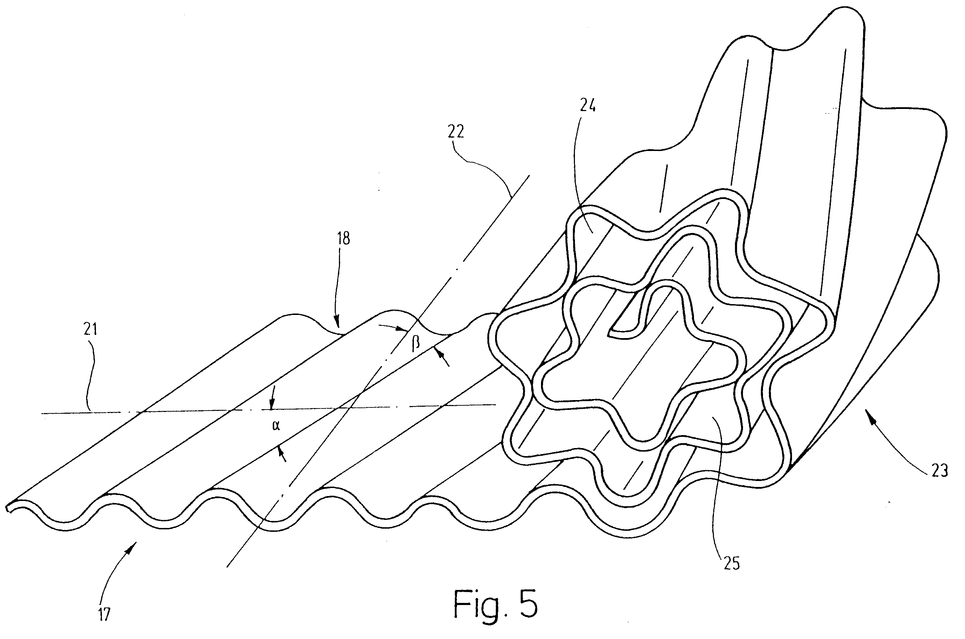

Fig. 4 den in eine flache Form überführten rechts/links gestrickten Schlauch aus Drahtgestrick nach Fig. 3 in schematisierter Darstellung,
Fig. 5 den gewellten und teilweise aufgewickelten Schlauch aus einem Drahtgestrick, wie er in Fig. 4 veranschaulicht ist, in schematisierter Darstellung,
Fig. 6 zwei zu einer Druckfeder zusammengefügte rotationssymmetrische Federelemente, die durch Formkörper gebildet sind, die jeweils aus einem verdichteten Drahtgestrick bestehen, in schematisierter, längsgeschnittener Darstellung,
Fig. 7 eine Axialfederanordnung mit zwei Federelementen nach Fig. 6, in schematisierter, längsgeschnittener Darstellung,
Fig. 8 eine abgewandelte Ausführungsform eines Federelementes, wie es bei den Federanordnungen nach den Fig. 6 und 7 verwendet ist und
Fig. 9 eine Zugfederanordnung mit einem Federelement, dessen Federkörper aus verdichtetem Drahtgestrick besteht, in schematisierter, längsgeschnittener Darstellung.

### Beschreibung

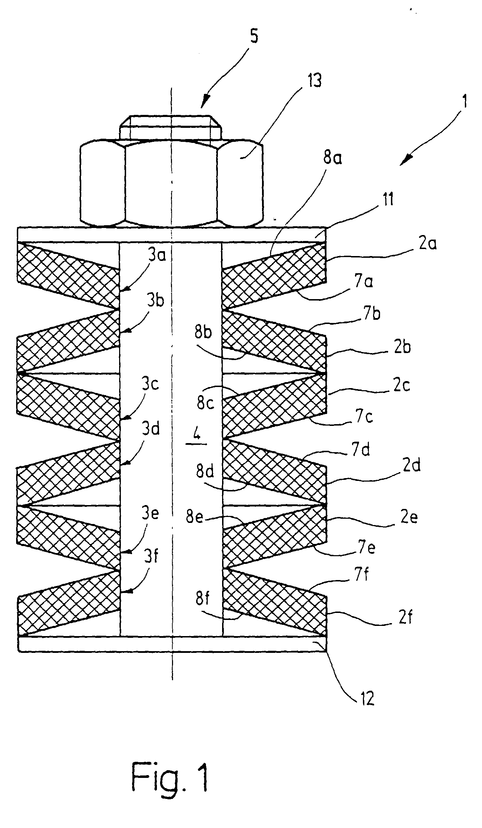

In Fig. 1 ist eine im ganzen mit 1 bezeichnete Federanordnung dargestellt, die beispielsweise als Druckfeder, als Druckfeder-Dämpfungselement oder als federnde Aufhängung von Maschinenteilen dienen kann. Als federnde Elemente enthält die Federanordnung 1 insgesamt sechs untereinander gleich ausgebildete Tellerfedern 2a, 2b, 2c, 2d, 2e, 2f, die, wie an späterer Stelle detaillierter erläutert ist, durch Formkörper aus komprimiertem Gestrick gebildet sind. Jede Tellerfeder 2 weist eine zentrale, im wesentlichen zylindrische Öffnung 3a, 3b, 3c, 3d, 3e, 3f auf. Die Tellerfedern 2 sitzen mit allenfalls geringem Spiel auf einem zylindrischen Schaft 4 eines Bolzens 5. (Bezugnahmen auf Elemente mit Bezugszeichen ohne Buchstabenindex sind Bezugnahmen auf alle Elemente mit gleicher Bezugszahl.). Jede Tellerfedern 2 haben die Gestalt eines Kreisrings, der in die Form eines dickwandigen Kegelstumpfmantels gebracht ist, dessen Wandstärke längs dem Radius und in Umfangsrichtung konstant ist.

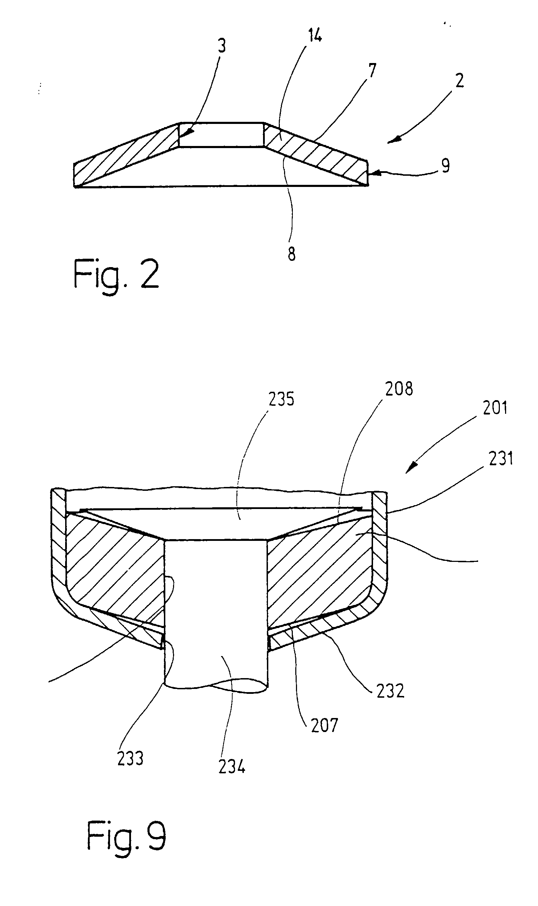

Jede Tellerfeder 2 weist, wie auch aus Fig. 2 hervorgeht, jeweils eine konische Außenkontur auf, so daß eine Axialseite 7 nach außen und eine an ihrer Gegenseite liegende Axialseite 8 nach innen gewölbt ist. An ihrem Außenumfang weist die Tellerfeder 2 eine im wesentlichen zylindrische Mantelfläche 9 auf.

Die Tellerfedern 2a, 2b, 2c, 2d, 2e, 2f sind auf dem Schaft 4 des Bolzens 5 jeweils paarweise gegensinnig angeordnet, so daß sich infolge der jeweils umgekehrten Biegung einander benachbarter Tellerfedern diese jeweils paarweise bei ihren Öffnungen 3 oder an ihrem äußeren Rand berühren und sich dort aneinander abstützen. Die außenständigen Tellerfedern 2a, 2f stützen sich mit ihrem jeweiligen äußeren Rand jeweils an einer flachen Scheibe 11, 12 ab. Während die in Fig. 1 unten dargestellte Scheibe 12 durch den flachen Kopf des Bolzens 5 gebildet ist, ist die Scheibe 11 eine auf dem Schaft 4 des Bolzens 5 sitzende, axial verschiebbare Druckscheibe. Zur Sicherung derselben an dem Bolzen 5 dient eine Mutter 13. Die Tellerfedern können an ihren Anlagestellen mit (nicht weiter dargestellten) Anlageelementen, wie Metallringen, Fassungen oder dergleichen, versehen sein.

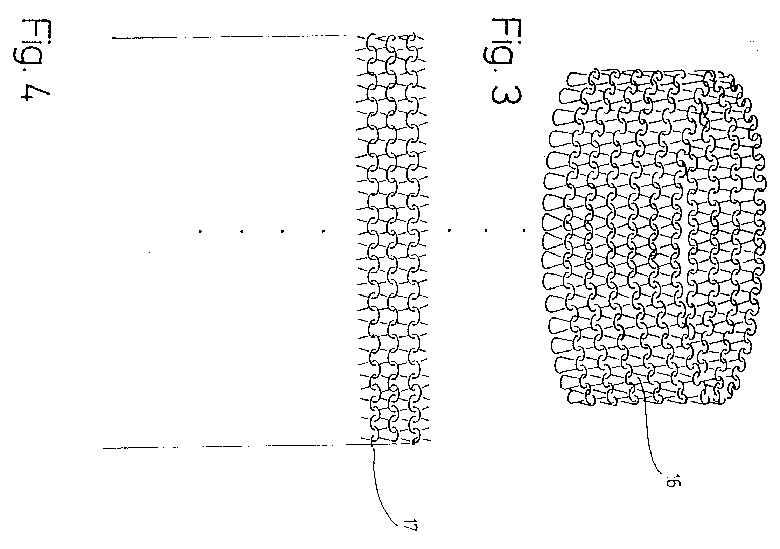

Die in Fig. 2 separat veranschaulichte Tellerfeder 2 wird im wesentlichen durch einen Federkörper 14 gebildet, der aus verdichteter Maschenware besteht. Die Maschenware ist ein nicht zu engmaschiges Gestrick aus Draht, vorzugsweise einem harten Federdraht, mit einem Durchmesser zwischen 0,2 mm und 0,3 mm. Zur Herstellung des Federkörpers wird aus dem genannten Draht zunächst ein rechts/links gestrickter Schlauch 16 hergestellt, wie er aus Fig. 3 ersichtlich ist. Dieser Schlauch wird in einem nachfolgenden Arbeitsgang in die Form eines flachen Bandes 17 überführt, indem er beispielsweise durch einen zwischen zwei Walzen definierten Spalt durchgeführt wird. Die Maschengröße des gestrickten Schlauches 16 und des Bandes 17 liegt in dem Bereich zwischen 3 mm und 8 mm, wobei das Verhältnis der Maschenweiten zu den möglichen Drahtdurchmessern im Bereich von 13 bis 35 liegt. Auf diese Weise wird eine gewisse Beweglichkeit der einzelnen Maschen gegeneinander erhalten.

In einem nachfolgenden Schritt, der grob in Fig. 5 veranschaulicht wird, werden an dem Band 17 überhöht dargestellte, schräg verlaufende Wellen 18 ausgebildet. Die untereinander parallelen Wellen 18 schließen mit der Längsrichtung 21 des Bandes 17 und ebenfalls mit der Querrichtung 22 jeweils einen spitzen Winkel α und β ein. Der Winkel β beträgt ungefähr 30°, wobei zur Beeinflussung der Feder- und Dämpfungseigenschaften der Tellerfeder 2 abweichende Werte sinnvoll sein können.

Das gewählte Gestrick (Band 17 in Fig. 5) wird in einem nächsten Arbeitsgang aufgewickelt, so daß sich ein Wickel 23 ausbildet, in dem zwischen einzelnen Lagen des gewellten Bandes 17 Hohlräume 24, 25 (sowie weitere, nicht bezeichnete) ausgebildet sind. Der nach Aufwickeln einer entsprechenden vorgeschnittenen Länge des Bandes 17 erhaltene Wickel 23 wird in einem nachfolgenden Prozeßschritt axial deformiert, wobei sich die einzelnen Lagen des Drahtgestricks in dem Wickel 23 miteinander verhaken und dadurch verbinden. Zur axialen Kompression dient eine Form oder ein Gesenk, deren bzw. dessen Aufnahmeraum die äußere Kontur des gewünschten Federkörpers 14 bestimmt. Die beim Zusammenpressen gewählten Parameter, insbesondere das Maß der Verdichtung des Wickels 23, bestimmen die späteren Eigenschaften des Federkörpers 14. Das Resultat des Preßvorganges ist die in Fig. 2 veranschaulichte Tellerfeder, die wie eine herkömmliche Tellerfeder deformierbar und bedarfsweise zusätzlich auf die Hälfte ihres Volumens komprimierbar ist. Die Federkonstante für die Verbiegung ist dabei meist deutlich geringer als die für die Kompression.

Die insoweit beschriebene Federanordnung 1 arbeitet wie folgt:

Das in Fig. 1 dargestellte, aus den Tellerfedern 2a, 2b, 2c, 2d, 2e, 2f gebildete Federpaket wird auf dem Bolzen 5 zwischen den Scheiben 11, 12 in entspanntem oder wenig gespanntem Zustand gehalten. Bei Einleitung einer äußeren Kraft, die die Scheiben 11, 12 aufeinander zu belastet, geben die Tellerfedern 2a, 2b, 2c, 2d, 2e, 2f federnd nach und vermindern ihre Konizität. Durch innere Reibung in den einzelnen Federkörpern 14 und durch Reibung der Öffnungen 3 an dem Schaft 4 werden Schwingungen, wie sie von außen auf die Scheiben 11, 12 eingeleitet worden sind oder wie sie bei schnellen Kraftwechseln entstehen, wirksam gedämpft.

Nach einem Hub, der etwas geringer ist als die halbe Höhe des entspannten Federpakets, wie es in Fig. 1 dargestellt ist, sind die einzelnen Tellerfedern 2a, 2b, 2c, 2d, 2e, 2f so weit deformiert oder aus ihrer Ruhestellung ausgelenkt, daß sie eine scheibenförmige Form annehmen und mit ihren jeweils paarweise aufeinander zu weisenden Axialseiten 7, 8 aneinander anliegen.

Wird die die Scheiben 11, 12 aufeinander zu belastende Kraft weiter erhöht, geben die Tellerfedern 2a, 2b, 2c, 2d, 2e, 2f bei deutlich vergrößerten Federkonstanten weiter elastisch nach und verringern ihre Dicke, wobei sie ohne oder mit geringer radialer Ausweichbewegung komprimiert werden. Auch dies erfolgt federnd nachgiebig und unter deutlicher innerer Dämpfung der Tellerfedern 2a, 2b, 2c, 2d, 2e, 2f.

Es existieren mehrere Möglichkeiten, auf die Feder- und Dämpfungseigenschaften der Tellerfeder 2 bei der Herstellung Einfluß zu nehmen. Dazu können der Drahtdurchmesser und die Maschenweite variiert werden. Auf die Ausbildung des Wickels 23 und somit ebenfalls der sich ergebenden Feder- und Dämpfungskennlinien haben die Höhe und die Breite der Wellen 18 (Fig. 5) sowie deren Winkel α oder β zur Längsrichtung 21 oder zur Querrichtung 22 Einfluß. Schließlich bestimmt die beim Zusammenpressen des Wickels 23 vorgenommene Verformung, d.h. die Kompression, die Lebensdauer der Tellerfedern 2. Wird das Volumen beim Zusammendrücken nicht stärker als auf ein Siebtel reduziert, wird eine Tellerfeder erhalten, die beispielsweise problemlos 1,4 Millionen Lastwechsel verkraftet. Höhere Verformungen vermindern die Anzahl der zulässigen Lastwechsel.

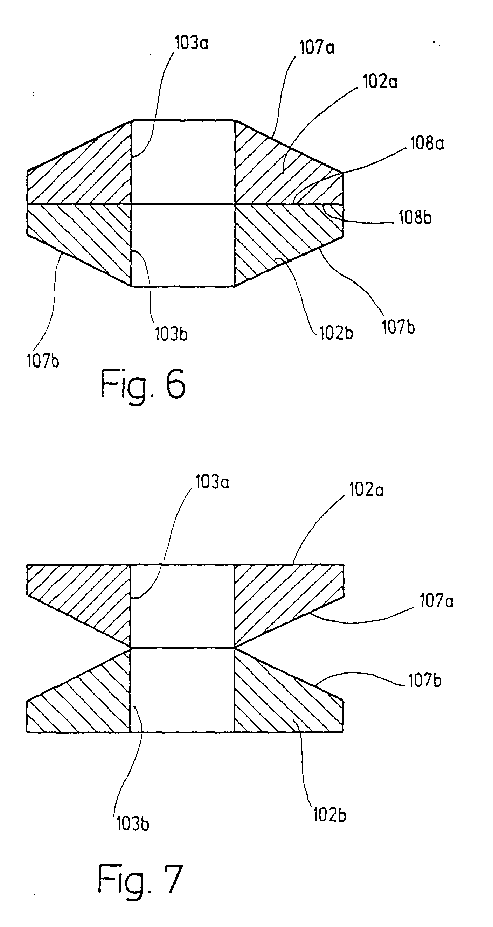

Aus Fig. 6 ist eine abgewandelte Ausführungsform einer Tellerfeder 102 (102a, 102b) ersichtlich, die einen ringförmigen, ebenfalls aus komprimiertem Drahtgestrick bestehenden Grundkörper mit trapezförmigem Querschnitt aufweist. Der ebenfalls durch Zusammenpressen eines aufgewickelten Drahtgestricks erhaltene Grundkörper weist, ebenso wie der Federkörper 14 der vorstehend beschriebenen Tellerfeder 2, eine gewisse elastische Zusammendrückbarkeit und eine innere Dämpfung auf. Die Tellerfeder 102 weist eine zentrale Durchgangsöffnung 103a auf, die der spielarmen oder -freien Aufnahme eines Bolzens oder eines ähnlichen Maschinenelementes dient. Während eine Axialseite 107 konisch ausgebildet ist, ist die auf der Gegenseite liegende Axialseite 108 plan ausgebildet. Somit können zwei Tellerfedern 102a, 102b mit ihren Planseiten 108a, 108b aneinanderliegend als Federelement, beispielsweise als Federkissen, dienen. Sowohl die innere Reibung in den entsprechenden Federkörpern als auch die Reibung der Wandung der Öffnungen 103a, 103b an einem entsprechenden Bolzen wirken dämpfend, so daß in den meisten Fällen zusätzliche Dämpferelemente entfallen können. Der Dämpfungseffekt kann, wie bei dem vorstehend im Zusammenhang mit der Fig. 1 beschriebenen Ausführungsbeispiel der Federanordnung 1, erhöht werden, indem das aus den jeweiligen Tellerfedern 2, 102 gebildete Federpaket mit geringem oder ohne Spiel in eine zylinderförmige Aufnahme eingesetzt wird.

Eine andere Möglichkeit der Anordnung der aus Fig. 6 ersichtlichen Tellerfedern 102a, 102b ist in Fig. 7 veranschaulicht. Die Tellerfedern 102a, 102b weisen hier mit ihren konischen Axialflächen 107a, 107b aufeinander zu. Wie bei der Anordnung nach Fig. 6 werden die Federkörper der Tellerfedern 102a, 102b bei Belastung mit Axialdruck zunächst im Bereich der Berandung ihrer Öffnungen 103a, 103b kraftbeaufschlagt und deformiert, wobei mit zunehmender Deformation der Federkörper der verformte Bereich und somit die Federkonstante steigt. Es wird eine progressive Federkennlinie erreicht.

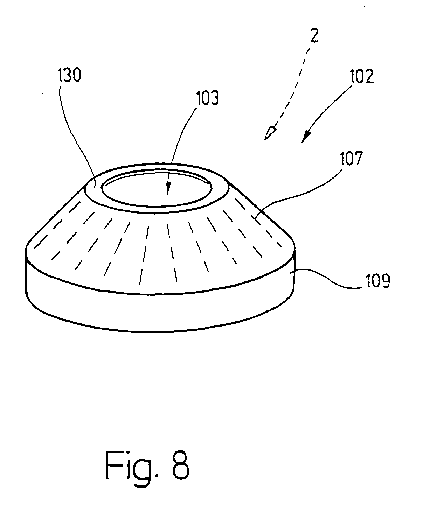

Zur Vermeidung von lokalen Überlastungen einer Tellerfeder 2 oder 102 kann diese, wie aus Fig. 8 hervorgeht, Anlage- oder Verbindungselemente, wie beispielsweise eine die Öffnung 103 umgebende Druckscheibe 130, aufweisen. Diese, beispielsweise aus Metall bestehende Druckscheibe, ist mit dem aus verdichtetem Metallgestrick bestehenden Formkörper verbunden. Beispielsweise kann die Druckscheibe 130 mit dem Druckkörper verschweißt, verklebt oder verhakt sein. Letzteres ist möglich, wenn die Druckscheibe 130 beispielsweise abgewinkelte Fortsätze aufweist und mit dem Wickel 23 gemeinsam verpreßt wird. Weitere Anlage- und Schutzelemente können an sonstigen Flächen der Tellerfeder 102 (2) vorgesehen sein, um deren Axialseiten 107, 108 (7, 8), Mantelfläche 109 (9) sowie die Innenfläche der Öffnung 103 (3) zu schützen.

Aus Fig. 9 ist eine Zugfederanordnung 201 ersichtlich, bei der eine hier etwas dicker ausgebildete Tellerfeder 202 als Federelement dient. Die bis auf ihre Dicke mit der aus Fig. 2 ersichtlichen Tellerfeder 2 übereinstimmende Tellerfeder 202 ist in einem zylindrischen Gehäuse 231 mit konischem Boden 232 gefaßt. Die Neigung des Bodens 232 ist etwas größer als die Neigung der Axialseite 207 der Tellerfeder 202, so daß die Tellerfeder 202 an ihrer Außenseite auf oder an dem Boden 232 sitzt. Zwischen der zylindrischen Wandung des Gehäuses 231 und der Tellerfeder 202 verbleibt kein Spiel.

Die zentrale Öffnung 203 der Tellerfeder 202 und eine in dem Boden 232 zentral vorgesehene Öffnung 233 durchsetzend ist ein Schaft 234 eines Zugelementes angeordnet, dessen Kopf 235 an der konkaven Axialseite 208 der Tellerfeder 202 anliegt. Die Neigung der der Axialseite 208 zugewandten Fläche des Kopfes 235 stimmt im wesentlichen mit der Neigung des Bodens 232 überein.

Bei einer an dem Schaft 234 angreifenden Zugkraft wird die Tellerfeder 202 zunächst mit geringerer Federkonstante so durchgebogen, daß sie flächig an dem Boden 232 und an dem Kopf 235 anliegt. Eine weitere Steigerung der Zugkraft bewirkt eine elastische Kompression der Tellerfeder 202.

Bei Tellerfedern 202 mit relativ großer Dicke kann die Federkonstante für die Kompression relativ gering eingestellt werden. In allen Fällen wird jedoch eine gute Dämpfung erreicht.

Ein vorzugsweise als Tellerfeder ausgebildetes, bedarfsweise jedoch auch in anderen Formen und Anwendungen nutzbares Federelement weist als wesentliches elastisches Element einen Federkörper auf, der aus einem komprimierten Gestrick, vorzugsweise einem Drahtgestrick, gebildet ist. Der Formkörper wird durch Verpressen eines Rohlings erhalten, der wenigstens eine, bedarfsweise auch mehrere Lagen eines Gestricks oder einer anderweitigen Maschenware enthält. Der so erhaltene Formkörper ist infolge mechanischer Verhakung der einzelnen Maschen miteinander und untereinander stabil. Er ist sowohl auf elastische Biegung als auch auf elastische Kompression belastbar und weist in beiden Fällen eine hohe innere Dämpfung auf.

Ein vorzugsweise als Tellerfeder ausgebildetes, bedarfsweise jedoch auch in anderen Formen und Anwendungen nutzbares Federelement weist als wesentliches elastisches Element einen Federkörper auf, der aus einem komprimierten Gestrick, vorzugsweise einem Federdrahtgestrick, gebildet ist. Der Formkörper wird durch Umformen eines Rohlings erhalten, der wenigstens eine, bedarfsweise auch mehrere Lagen eines Gestricks oder einer anderweitigen Maschenware enthalt. Der so erhaltene Formkörper ist infolge mechanischer Verhakung der einzelnen Maschen miteinander und untereinander stabil. Er ist sowohl auf elastische Biegung als auch auf elastische Kompression belastbar und weist in beiden Fällen eine hohe innere Dämpfung auf. Die Federwirkung beruht überwiegend auf einer elastischen räumlichen Verformung des Formkörpers und weniger auf einer elastische Kompression des Formkörpers.

## Patentansprüche

1. Federelement (2) mit einem Federkörper (14), der als elastischer Formkörper (14) aus wenigstens einem elastischen Strang-, faden- oder drahtförmigen Ausgangsmaterial (16) ausgebildet ist, und bei dem das den Formkörper (14) ausbildende Ausgangsmaterial vermascht ist.

2. Federelement nach Anspruch 1, dadurch gekennzeichnet, daß der Formkörper (14) scheiben- oder plattenförmig ausgebildet ist und eine zentrale Öffnung (3) aufweist.

3. Federelement nach Anspruch 1, dadurch gekennzeichnet, daß der Formkörper (3) wenigstens eine konische Außenkontur (Axialseite 7) aufweist.

4. Federelement nach Anspruch 2, dadurch gekennzeichnet, daß die Öffnung (3) zylindrisch und koaxial zu einer äußeren Mantelfläche (9) des Formkörpers (14) ausgebildet ist.

5. Federelement nach Anspruch 1, dadurch gekennzeichnet, daß der Formkörper (14) in wenigstens einer Richtung biegeelastisch ausgebildet ist.

6. Federelement nach Anspruch 1, dadurch gekennzeichnet, daß der Formkörper (14) in wenigstens einer Richtung komprimierbar ist.

7. Federelement nach Anspruch 5 und 6, dadurch gekennzeichnet, daß die Richtungen miteinander übereinstimmen.

8. Federelement nach Anspruch 1, dadurch gekennzeichnet, daß das Ausgangsmaterial biegeelastisch ist.

9. Federelement nach Anspruch 1, dadurch gekennzeichnet, daß das Ausgangsmaterial Draht ist.

10. Federelement nach Anspruch 1, dadurch gekennzeichnet, daß zur Ausbildung des Formkörpers (14) eine Maschenware, vorzugsweise ein Gestrick (16) als Ausgangsmaterial vorgesehen ist.

11. Federelement nach Anspruch 1, dadurch gekennzeichnet, daß der Formkörper (14) aus verdichtetem Gestrick ausgebildet ist.

12. Federelement nach Anspruch 10 oder 11, dadurch gekennzeichnet, daß das Gestrick (16) rechts/links gestrickt ist.

13. Federelement nach Anspruch 10 oder 11, dadurch gekennzeichnet, daß das Gestrick (16) ein Rundstrickschlauch ist.

14. Federelement nach Anspruch 13, dadurch gekennzeichnet, daß der Rundstrickschlauch zu einem gewellten Band (17) zusammengedrückt ist, das zur Ausbildung des Formkörpers (14) zu einem Wickel (23) aufgewickelt und in die gewünschte Form zusammengedrückt ist.

15. Federelement nach Anspruch 1, dadurch gekennzeichnet, daß der Formkörper (14) mit wenigstens einem biegesteifen Anlageelement (130) zur Ein- und Ausleitung von Kräften in und aus dem Formkörper (14) verbunden ist.

16. Federelement nach einem oder mehreren der vorhergehenden Ansprüche, dadurch gekennzeichnet, daß das Federelement (2) als Tellerfeder ausgebildet ist.

17. Verfahren zur Herstellung eines Federelementes (2) nach einem oder mehreren der vorhergehenden Ansprüche, zu dem die folgenden Schritte gehören:
a) es wird ein aus einer Maschenware bestehendes Halbfabrikat angefertigt,
b) das Halbfabrikat wird in eine dem Formkörper des Federelements entsprechende Form überführt.

18. Verfahren nach Anspruch 17, dadurch gekennzeichnet, daß die Maschenware rundgestrickt, rundgewirkt oder rundgehäkelt schlauchförmig ausgebildet ist.

19. Verfahren nach Anspruch 17, dadurch gekennzeichnet, daß die schlauchförmig ausgebildete Maschenware zu einem flachen Band zusammengedrückt ist.

20. Verfahren nach Anspruch 19, dadurch gekennzeichnet, daß das Band in eine gewellte Form überführt wird.

21. Verfahren nach Anspruch 20, dadurch gekennzeichnet, daß die ausgebildeten Wellen in einem spitzen Winkel zu der Querrichtung des Bandes angeordnet sind.

22. Verfahren nach Anspruch 19, dadurch gekennzeichnet, daß das Band zu einem Wickel aufgewickelt wird.

23. Verfahren nach Anspruch 22, dadurch gekennzeichnet, daß der Wickel in einem Preßarbeitsgang in die dem Formkörper entsprechende Form überführt wird.

24. Verfahren nach Anspruch 17, dadurch gekennzeichnet, daß die schlauchförmig ausgebildete Maschenware zur Bildung des Formkörpers in Achsrichtung des Schlauchs zusammengestaucht ist.

25. Verwendung von Maschenware zur Herstellung von Federelementen.
